# EUROPEAN PATENT APPLICATION

(11) **EP 2 269 889 A1**
(43) Date of publication of application: **05.01.2011**
(21) Application number: 09164183.7
(22) Date of filing: 30.06.2009
(51) Int. Cl.: B62B 3/00, B62B 3/06, B62B 5/00

(54) **Adaptor for a carrier rolling on swivel wheels**

(71) Applicant: Movexx International B.V., 3905 KX Veenendaal (NL)
(72) Inventor: van Vlastuin, Hendrik, 3904 KN, Veenendaal (NL)
(74) Representative: Ketelaars, Maarten F.J.M.

(57) **Abstract**

The invention relates to an adaptor (1) for operationally coupling the carrier (25) with a drive unit (20) with a driving wheel (38), wherein the adaptor (1) comprises; a frame (2) for transferring load between the carrier (25) and the drive-unit (20), first engaging means (24,42,16) provided on the frame (2) for engaging the carrier (25) in a stable manner, second engaging means (4) provided on the frame (2) for engaging the drive unit (20), a point of contact (5) provided on the frame (2) for engaging a floor for preventing drift of the carrier (25).

## Description

### Background

The present invention relates to an adaptor for a carrier rolling only on swivel wheels. Such a carrier is well known means of transportation in all kinds of industry. A swivel wheel is also known as a swivelling wheel, a caster wheel or a castor wheel. Though these carriers do require a minimum of space for manoeuvring them, the manoeuvrability from a point of view of the operator is cumbersome because it is difficult to keeps these carriers rolling in the desired heading. Therefore handling these carriers puts a lot of stress to the operator, especially when using a drive-unit.

The present invention further relates to a method for manoeuvring a carrier rolling only on swivel wheels.

### Summary of the invention

The invention aims to improve the manoeuvrability of a carrier that is provided with swivel wheels only.

Another object of the invention is to improve manoeuvrability of the carrier coupled to a drive-unit as known from EP A 1967438 from the applicant.

According to a first aspect of the invention this is realized with an adaptor for temporarily connecting a point of contact to a carrier rolling only on swivel wheels for improving manoeuvrability of the carrier. In this connections temporarily means for as long as the carrier is handled or in other words manoeuvred. The adaptor is demountably coupled to the carrier and of the type with an ease of use and time needed to couple comparable with for example the time needed to pick up a load with a forklift truck.

This adaptor provides an additional point of contact to the carrier where the carrier can pivot around resulting in an improved manoeuvrability of the carrier during handling of the carrier. A point of contact is in this connection anything that engages the floor whereupon the carrier is running with its swivel wheels and provides enough friction to provide that additional pivoting point to the carrier.

According to a further aspect of the invention, the adaptor is suitable for operationally coupling the carrier with a drive unit with a driving wheel, wherein the adaptor comprises; a frame for transferring load between the carrier and the drive-unit, first engaging means provided on the frame for engaging the carrier in a stable manner, second engaging means provided on the frame for engaging the drive unit, a point of contact provided on the frame for engaging a floor for preventing drift of the carrier. When the carrier is coupled to a drive unit, the ease of operation of the carrier is even more improved.

According to a further embodiment of the invention, the point of contact comprises a fixed wheel, rotatable around a wheel axis, for preventing drift of the carrier substantially transverse to the travel direction of the carrier. The fixed wheel still provides the additional pivot point for the carrier needed for the improved manoeuvrability but reduces the friction losses in the direction of travel of the carrier.

According to a further embodiment of the invention, the frame comprises a first frame part hingeable connected to a second frame part, wherein the first engaging means and/or the second engaging means are provided on the first frame part and the point of contact is provided on the second frame part. This provides the possibility for the point of contact to engage the floor with a controlled force. Providing both the first and second engaging means on the same frame part provides a direct, free of play, transfer of load between the drive-unit and the carrier.

According to a further embodiment of the invention, the second frame part is hingeable, with respect to the first frame part, between a first position, for positioning the adaptor with respect to a carrier, and a second position for engaging a floor by means of the point of contact as well as engaging a carrier by means of the first engaging means. This provides the possibility for the adaptor being coupled to a carrier without the point of contact engaging the floor, therewith improving the ease of use of the adaptor.

According to a further embodiment of the invention, the adaptor comprising means for prestressing the second frame part towards the second position for determining a gripping force between the point of contact and a floor. This improves the controllability of the force between the floor and the point of contact even more. The means for prestressing may comprise for example an actuator or a spring.

According to a further embodiment of the invention, the adaptor comprises an carrier accommodating space for accommodating a carrier or a part of a carrier therein, a bolt for holding the second frame part in its first position, wherein the bolt is movable between a second frame part locking position and a second frame part releasing position, and wherein the bolt, when in its second frame part locking position, extends in the carrier accommodating space for being operated by a carrier for moving the bolt from its second frame part locking position to its second frame part releasing position. Operating the bolt by means of the carrier is beneficial with respect to the ease of use of the adaptor.

According to a further aspect of the invention, the invention provides a system comprising the adaptor and a drive unit hingeable connected to the adaptor. This way an operator can easily determine the heading of the carrier without a need to turn the carrier with its load to the desired heading with muscular strength.

According to a further embodiment of the system, the adaptor is hingeable, with respect to the drive unit, around a first hinging axis substantially transverse with respect to the wheel axis of the fixed wheel. This improves the manoeuvrability of the carrier even more.

According to a further embodiment of the system, the carrier is fixedly connected to the adaptor. In this connection, fixedly connected means that the adaptor moves with the carrier at least in the horizontal plane.

According to a further embodiment of the system, the point of contact is at or near the centre of the carrier. This improves the manoeuvrability of the carrier even more.

According to a further embodiment of the system, the point of contact is at the centre of the carrier at the half of the carrier across the first engaging means. In other words, the point of contact is positioned beyond the centre of the carrier seen from the adaptor. This improves the manoeuvrability of the carrier even more. It will be clear that it is conceivable as well for the point of contact to be at the half of the carrier at the first engaging means.

According to a first aspect of the invention this is realized with a method for manoeuvring a carrier rolling only on swivel wheels, wherein the method comprises the steps of; stable coupling of an adaptor to the carrier wherein the adaptor comprises a point of contact for preventing drift of the carrier, subsequently manoeuvring of the carrier, and finally releasing of the adaptor from the carrier.

According to a further embodiment of the method, the point of contact comprises a fixed wheel.

The invention further relates to a device comprising one or more of the characterising features described in the description and/or shown in the attached drawings.

The invention further relates to a method comprising one or more of the characterising features described in the description and/or shown in the attached drawings.

The various aspects discussed in this patent can be combined in order to provide additional advantageous advantages.

### Description of the drawings

The invention will be further elucidated referring to an embodiment of the adaptor shown in the drawings wherein shown in:
Fig. 1 in perspective view an adaptor according to the invention, wherein the point of contact is in its lower position;
fig. 2 in side view the adaptor of fig. 1 coupled to a drive unit;
fig. 3 in side view the adaptor of fig. 1, wherein the point of contact is in its upper position;
fig. 4 in side view a detail of the adaptor of fig. 1.

### Detailed description of embodiments

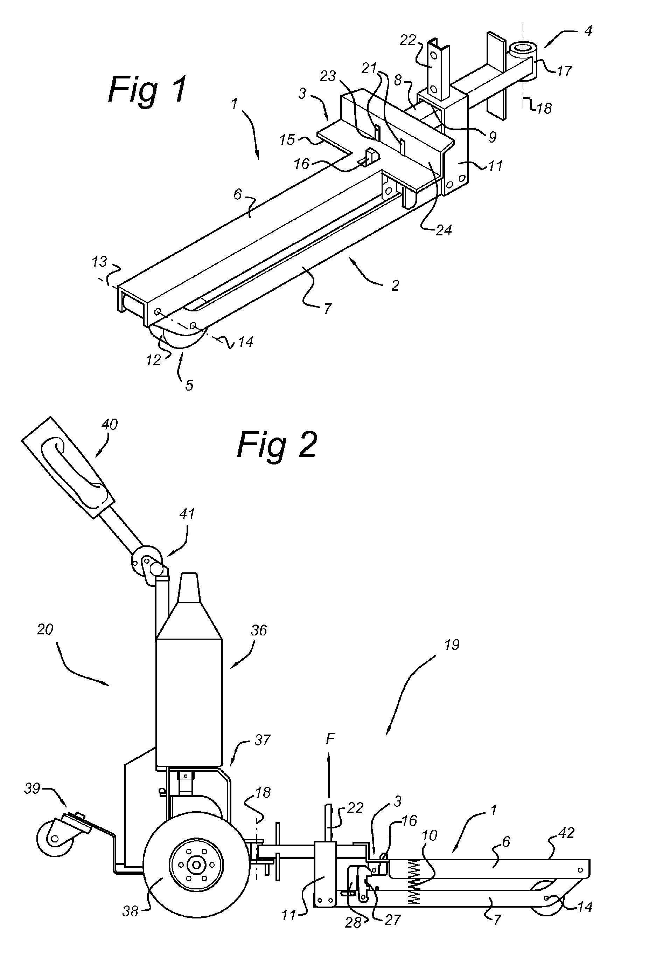

The embodiment of the invention will be described referring to fig. 1-4. Fig. 1 shows a perspective view of an adaptor 1 with its point of contact 5 in its lower position wherein the point of contact 5 engages the floor (not shown) for creating grip. In use, the adaptor 1 is coupled to a carrier 25 that is rolling on swivelling wheels only for improving the manoeuvrability of the carrier 25. The adaptor 1 comprises a frame 2. The adaptor 1 engages the carrier 25 by means of the frame 2. Here the frame 2 couples the adaptor 1 to a drive-unit 20 by means of the second engaging means 4. The frame 2 is pivotably coupled to the drive-unit 20 by means of the hollow cylinder 17 and pivots around axis 18. It is conceivable that the adaptor 1 alone improves manoeuvrability of the carrier 25 without the adaptor being coupled to a drive unit. In that case the manual manoeuvring of the carrier 25 is improved. The frame 2 comprises a first frame part 6 and a second frame part 7. The upper first frame part 6 faces the carrier 25, specifically the underside of the carrier 25. Here, the first frame part 6 comprises a first frame part member 42 across the engaging means 4, a second frame part member 8 coupled to the second engaging means 4. Here, the first frame part member 42 and second frame part member 8 are mutually connected by means of a Z-profile 15. Here the first frame part member 42 and the Z-profile 15 are of one piece for efficient manufacturability of the first frame part 6. Here, the second frame part member 8 is welded to the Z-profile 15. The first frame part 6 comprises an abutment 24 for positioning the adaptor 1 partly underneath the carrier 25. Here, the middle section 24 of the Z-profile 15 constitutes the abutment 24 for the carrier 25. The abutment 24 abuts the carrier 25 for coupling the adaptor 1 and the carrier 25 with respect to rotations around the axis 18.

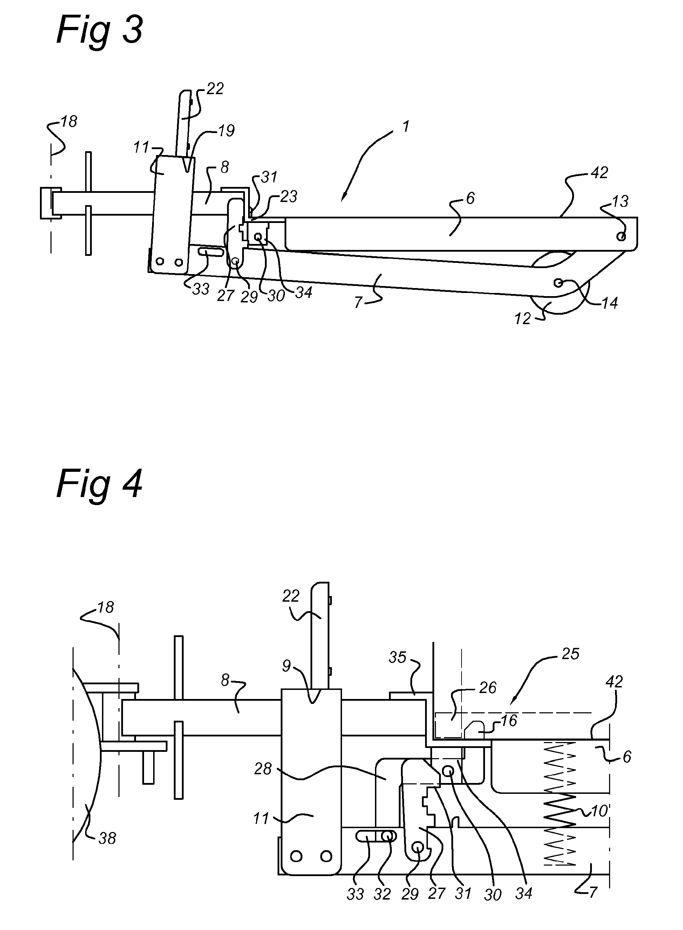

The lower second frame part 7 faces the floor whereupon the carrier 25 runs. The point of contact 5, here a fixed wheel 12 running around a wheel axis 14, is provided on the second frame part 7 and faces the floor. Here the first frame part 6 and the second frame part 7 extend along each other. At one end of the frame 2, the first frame part 6 and the second frame part 7 are hingeable coupled around a hinge 13. The lower second frame part 7 is hingeable with respect to the first frame part 6 between a first and a second position. In use, when the second frame part 7 is in the first position, as shown in fig. 3, the adaptor 1 is accommodated underneath a carrier 25. In use, when the second frame part 7 is in the second position, as shown in fig. 2, the point of contact 5 engages the floor for providing grip and improving manoeuvrability of the carrier 25.

Fig. 2 shows a side view of a system 19 of the adaptor 1 of fig. 1 coupled to a drive unit 20. The drive unit is described in EP A 1967438 from the applicant. The operator engages the drive-unit 20 by means of the operating handle 40. The operating handle is pivotably coupled to the drive-unit 20 and pivots around hinge 41. Therefore it not possible for the operator to be exposed to a moment due to any load to the drive-unit 20. The drive-unit 20 is intended for driving a carrier and its associated load, not for supporting the carrier and carry all or part of its load. The drive-unit 20 comprises a battery pack 36 for supplying an electric drive 37 that drives the wheel 38. Here the drive-unit 20 is provided with a swivel wheel 39 to position the drive unit 20 on, when the drive unit 20 is not in use. In fig. 2 the second frame part 7 is in the second position with respect to the first frame part 6. The second frame part 7 is hingeable towards the first position by applying a force towards the first frame part 6. Here, the force is applied to the second frame part 7 by means of a handgrip (not shown) coupled to the second frame part 7 via the mounting plate 22 and the U-profile 11. The U-profile 11 guides the second frame part 7 when the second frame part 7 hinges between the first and the second position. Here, the second frame part 7 is guided between the two legs of the U-profile 11. This is beneficial for the adaptor 1 since the guiding of the second frame part 7 between the two legs of the U-profile 11 results in a compact and robust frame 2 and therefore in a better manoeuvrability of a carrier coupled to the adaptor 1.

Fig. 3 depicts a side view of the adaptor 1 of fig. 1. The second frame part 7 is in its first position wherein the point of contact 5 is in its upper position. The second frame part 7 is held in its first position by means of a second bolt 27. The second bolt 27 is coupled to the second frame part 7 and engages the first frame part 6 for holding the second frame part 7 in its first position. The second bolt 27 is operatable by means of a carrier 25 for bringing the second bolt 27 out of engagement with the second frame part 7 and therefore enabling the second frame part 7 to move to its second position.

Fig. 4 shows a side view of a detail of the adaptor 1 of fig. 1. The adaptor 1 engages a carrier 25 that is partly and schematically depicted. The swivel wheels of the carrier 25 are not shown. The second frame part 7 is depicted in its second position wherein the point of contact 5 engages the floor. The spring 10 forces the second frame part 7 to hinge towards its second position. When the second frame part 7 is in its second position, the spring 10 presses the fixed wheel 12 against the floor whereupon the carrier 25 runs. In use, the second position of the second frame part 7 is defined by the point of contact 5 that engages the floor, and restricted by the abutment 9 that engages the first frame part 6. Here the abutment 9 is provided on a U-profile 11, here at the middle section of the U-profile 11. The U-profile 11 bridges the first frame part 6, here at the second frame part member 8 away from the hinging axis 13. The first frame part 6 is provided with a first bolt 16 that couples the carrier 25 to the adaptor 1. Here, the first bolt 16 hooks the carrier 25 for towing the carrier 25. The first bolt 16 is hingeable coupled to the first frame part 6 for hinging between a carrier couple position as shown in fig 2 and 4, and a carrier release position. The first bolt 16 is hingeable coupled to the first frame part 6 by means of the bolt mounting plate 24. The first bolt 16 hinges around the bolt axis 30. The first bolt 16 is operatable coupled to the second frame part 7 for hinging the first bolt 16 between the carrier couple position as shown in fig 2 and 4, and a carrier release position. Here, the first bolt 16 is provided with a lever arm 28 and coupled therewith to the second frame part 7 by means of a cam 32 slot 33 mechanism. Beneficially, the carrier 25 is decoupled from the adaptor 1 when the second frame part 7 is brought from its second to its first position.

The second frame part 7 is provided with a second bolt 27 for holding the second frame part 7 in its first position, as shown in fig. 3. The second bolt 27 is coupled to the second frame part 7. The second bolt 27 is movable between a second frame part locking position shown in fig. 3 and a second frame part releasing position shown in fig. 4. When the second frame part 7 is in its first position and the second bolt 27 is in its second frame part locking position, the second frame part 7 is held in its first position. The second bolt 27 is forced towards its second frame part locking position by means of a resilient element, here a spring (not shown). Here, the second bolt 27 is hingeable coupled to the second frame part 7 and hinges between the second frame part locking position and the second frame part releasing position. A frame part 26 of the carrier 25 is accommodated in a carrier accommodating space 3. Here the carrier accommodating space 3 is formed between the first bolt 16 and the first frame part 6, here the middle section 24 of the Z-profile 15 of the first frame part 6. The first bolt 16 adjoins and defines the carrier accommodating space 3. The second bolt 27 extends in the carrier accommodating space 3 when the second frame part 7 is in its first position and the second bolt 27 is in its second frame part locking position. Therefore the adaptor 1 is easy to use because coupling the adaptor 1 to a carrier 25 will force the second frame part 7 to its second position wherein the point of contact 5 engages the floor. The first bolt 16 is coupled, here hingeable coupled, to the first frame part 6. The second bolt 27 is coupled, here hingeable coupled, to the second frame part 7. The second bolt 27 extends in the carrier accommodating space 3 through a cut-away 21 (fig. 1), here provided in the middle section 24 of the Z-profile 15 in fig. 4 referred to with 35. In fig. 1 two second bolts 27 extend each through a cut-away 21. The second bolt 27 engages the first frame part 6 by means of abutment 31 provided on the second bolt 27 and the abutment 23 provided on the Z-profile 35.

It will also be obvious after the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. Adaptor (1) for temporarily connecting a point of contact (5) to a carrier (25) rolling only on swivel wheels for improving manoeuvrability of the carrier (25).

2. Adaptor (1) according to claim 1, for operationally coupling a carrier (25) rolling only on swivel wheels with a drive unit (20) with a driving wheel (38), the adaptor (1) comprising; a frame (2) for transferring load between the carrier (25) and the drive-unit (20), first engaging means (24, 42, 16) provided on the frame (2) for engaging the carrier (25) in a stable manner, second engaging means (4) provided on the frame (2) for engaging the drive unit (20), a point of contact (5) provided on the frame (2) for engaging a floor for preventing drift of the carrier (25).

3. Adaptor (1) according to a preceding claim, wherein the point of contact (5) comprises a fixed wheel (12), rotatable around a wheel axis (14), for preventing drift of the carrier (25) substantially transverse to the travel direction of the carrier (25).

4. Adaptor (1) according to a preceding claim, wherein the frame (2) comprises a first frame part (6) hingeable connected to a second frame part (7), wherein the first engaging means (24, 42, 16) and/or the second engaging means (4) are provided on the first frame part (6) and the point of contact (5) is provided on the second frame part (7).

5. Adaptor (1) according to claim 4, wherein the second frame part (7) is hingeable, with respect to the first frame part (6), between a first position for positioning the adaptor (1) with respect to a carrier (25), and a second position for engaging a floor by means of the point of contact (5) as well as engaging a carrier (25) by means of the first engaging means (24, 42, 16).

6. Adaptor (1) according to a preceding claim 4-5, comprising means for prestressing the second frame part (7) towards the second position for determining a gripping force between the point of contact (5) and a floor.

7. System (19) comprising the adaptor (1) according to a preceding claim, and a drive unit (20) hingeable connected to the adaptor (1).

8. System according to claim 7, wherein the adaptor (1) is hingeable, with respect to the drive unit (20), around a first hinging axis (18) substantially transverse with respect to the wheel axis (14).

9. System according to a preceding claim 7-8, comprising a carrier (25) rolling only on swivel wheels, wherein the carrier (25) is fixedly connected to the adaptor (1).

10. System according to a preceding claim, wherein the point of contact (5) is at the centre of the carrier (25).

11. System according to a preceding claim 7-9, wherein the point of contact (5) is at the centre of the carrier (25) at the half of the carrier across the first engaging means (24, 42, 16).

12. Method for manoeuvring a carrier (25) rolling only on swivel wheels, wherein the method comprises the steps of; stable coupling of an adaptor (1) to the carrier (25) wherein the adaptor (1) comprises a point of contact (5) for preventing drift of the carrier (25), manoeuvring of the carrier (25), releasing of the adaptor (1) from the carrier (25).

13. Method according to claim 12, wherein the point of contact (5) comprises a fixed wheel (12).
